Europäisches Patentamt

European Patent Office

Office européen des brevets

(19)

(11) Veröffentlichungsnummer : **0 211 276 B1**

# (12) EUROPÄISCHE PATENTSCHRIFT

(45) Veröffentlichungstag der Patentschrift :
28.06.89

(21) Anmeldenummer : 86109591.7

(22) Anmeldetag : 14.07.86

(51) Int. Cl.⁴ : **A 01 B 33/14**

(54) **Bodenbearbeitungsmaschine.**

(30) Priorität : 01.08.85 DE 3527580
10.12.85 DE 3543554
04.07.86 DE 3622530

(43) Veröffentlichungstag der Anmeldung :
25.02.87 Patentblatt 87/09

(45) Bekanntmachung des Hinweises auf die Patenterteilung : 28.06.89 Patentblatt 89/26

(84) Benannte Vertragsstaaten :
DE FR GB IT NL

(56) Entgegenhaltungen :
FR--A-- 2 090 356
FR--A-- 2 208 588
FR--A-- 2 278 232
FR--A-- 2 310 687
FR--A-- 2 447 134
NL--A-- 262 937
US--A-- 3 380 786
US--A-- 3 887 014
(73) Patentinhaber : Amazonen-Werke H. Dreyer GmbH &
Co. KG
Am Amazonenwerk 9-13
D-4507 Hasbergen-Gaste (DE)

(72) Erfinder : Grosse-Scharmann, Franz, Dr.
Waldstrasse 35
D-2872 Hude i.O. (DE)
Erfinder : Gattermann, Bernd
Eichenwall 3
D-2872 Hude i.O. (DE)
Erfinder : Gieseke, Reinhard
Eichenwall 4
D-2872 Hude i.O. (DE)

## Beschreibung

Die Erfindung betrifft eine Bodenbearbeitungsmaschine gemäß des Oberbegriffes des Anspruches 1.

Eine derartige Bodenbearbeitungsmaschine ist bekannt durch die FR-A-24 47 134. Die Werkzeuge bei dieser Bodenbearbeitungsmaschine sind jeweils mit Hilfe von zwei Schraubbolzen und einem Klemmstück an dem Werkzeugkreisel fest eingklemmt. Nachteilig ist bei dieser Befestigungsart, daß einerseits relativ große und hochfeste Schraubbolzen verwendet werden müssen. Weiterhin müssen die Schraubbolzen mit sehr großen Kräften fest angezogen werden, damit die Werkzeuge auch unter schwierigsten Einsatzbedingungen sicher an dem Werkzeugkreisel fest eingeklemmt bleiben. Sehr aufwendig und zeitraubend ist es, wenn die Werkzeuge ausgewechselt werden müssen. Das Auswechseln der Werkzeuge bei der bekannten Maschine nimmt eine sehr große Zeit in Anspruch vor allem um die Schrauben zu lösen und wieder fest anzuziehen. Weiterhin ist es vor allem auf dem Acker bzw. für den Landwirt allein mit Hilfe von Bordwerkzeug praktisch unmöglich, Zinken auf dem Acker auszutauschen.

Der Erfindung liegt die Aufgabe zugrunde, das Auswechseln der Werkzeuge wesentlich zu vereinfachen und zu erleichtern, so daß die Werkzeuge in einer sehr kurzen Zeit ausgetauscht werden können.

Diese Aufgabe wird erfindungsgemäß durch das Kennzeichen des Anspruches 1 gelöst. Infolge dieser Maßnahmen lassen sich die Werkzeuge sehr einfach und sehr schnell austauschen. Die Bolzen haben lediglich die Aufgabe, das jeweilige Arbeitswerkzeug in der Aufnahmeöffnung an dem Werkzeugkreisel zu sichern. Eine Funktion hinsichtlich der festen Halterung für die Werkzeuge an den Werkzeugkreiseln kommt diesen Bolzen nicht zu. Die Kräfte, die beim Einsatz der Maschine an den Werkzeugen auftreten, werden im wesentlichen allein durch die formschlüssige Verbindung zwischen den Befestigungsteilen der Werkzeuge und der Aufnahmeöffnung in den Werkzeugkreiseln aufgenommen.

Durch den Prospekt AMAZONE-Kreiselgrubber mit dem Druckvermerk « D 574*2.84 » ist bereits eine Befestigung für gerade Zinken bekannt, die in eine nach unten weisende Aufnahmeöffnung gesteckt werden, so daß eine formschlüssige Verbindung zwischen den Werkzeugen und den Aufnahmeöffnungen der Werkzeugkreisel gegeben ist. Die Werkzeuge werden durch einen Sicherungsbolzen in den Aufnahmeöffnungen gehalten.

In einer bevorzugten Ausführungsform ist erfindungsgemäß vorgesehen, daß sich auf der Unterseite der Werkzeugkreisel zur Bildung der Aufnahmeöffnungen nach unten gerichtete Stege befinden, und daß auf der Unterseite der Stege eine zumindestens zwei Stege verbindende Platte aufgeschweißt ist. Hierdurch ist es möglich, den Werkzeugkreisel als einfaches Schmiedeteil herzustellen, wobei dann die Aufnahmeöffnung dadurch geschaffen wird, daß jeweils zwei Stege des Schmiedeteiles durch eine Schweißverbindung mit einer Platte verbunden werden. Somit kann in sehr einfacher Weise die Aufnahmeöffnung für das Befestigungsteil des Werkzeuges geschaffen werden.

Weiterhin sieht die Erfindung vor, daß auf der Oberseite des Werkzeugkreisels im Bereich der Bohrungen, in denen die Bolzen angeordnet werden, eine Versenkung angeordnet ist. Hierbei ist erfindungsgemäß vorgesehen, daß die Bolzen auf der Oberseite des Werkzeugkreisels versenkt angeordnet sind. Somit können sich keine Steine zwischen den Bolzen und dem Getriebegehäuse einklemmen und somit auch nicht zu Beschädigungen des Getriebegehäuses führen. In einer besonderen Ausführungsform der Erfindung ist vorgesehen, daß die Versenkung als Sechskant ausgebildet ist. Somit können in der Versenkung auch Sechskantschrauben angeordnet werden. Dieses ist vor allem dann von Vorteil, wenn die Bolzen mit einer Schraubenmutter gesichert werden sollen. Die Schraubbolzen können sich somit nicht verdrehen.

Auch bietet die als Sechskant ausgebildete Versenkung oder andere Formen der Versenkung den Vorteil, daß sich die Bolzen nicht drehen können. Hierdurch wird ein Verschleiß vermieden.

Weiterhin sieht die Erfindung vor, daß die Sicherungsteile bzw. Schnellverschlüsse der Bolzen auf der Unterseite der Werkzeugkreisel geschützt angeordnet sind. Hierdurch werden Beschädigungen beim rauhen Einsatz der Maschine an den Sicherungsteilen vermieden. In vorteilhafter Weise ist auf der Unterseite der Werkzeugkreisel zumindest in Drehrichtung der Werkzeugkreisel gesehen vor den Bolzen ein Schutzschirm, vorzugsweise stehend angeordnet.

Damit sich zwischen den Werkzeugkreiseln bzw. den Werkzeugen keine großen Steine einklemmen können, ist bei den einen runden Querschnitt aufweisenden Werkzeugkreiseln vorgesehen, daß der Durchmesser der Werkzeugkreisel etwa dem Abstand zwischen den oberen äußeren Teilen der Werkzeuge entspricht. Eine besonders gute geschützte Anordnung des Befestigungsteiles der Werkzeuge wird dadurch erreicht, daß die Werkzeugkreisel einen schmalen umlaufenden Ring aufweisen, der zumindest teilweise das Befestigungsteil des Werkzeuges überdeckt.

Damit die Bodenbearbeitungsmaschine in einfacher Weise für den Einsatz auf steinigen Böden entscheidend verbessert wird, ist erfindungsgemäß vorgesehen, daß die Aufnahmeöffnung zumindest in ihrem äußeren radialen Bereich von der Mitte der Aufnahmeöffnung in tangentialer Richtung gesehen eine wesentlich größere Höhe als die Höhe der Befestigungsteile der Werkzeuge aufweist. Infolge dieser Maßnahmen wird erreicht, daß das Befestigungsteil sich über einen gewissen Bereich seiner Länge innerhalb der Aufnahmeöffnung um eine senkrecht zu der Drehachse des Werkzeugkreisels liegende Achse um einen gewissen Betrag verdrehen kann. Dieses ist vor allem von Bedeutung, wenn das Bodenbearbeitungswerkzeug auf im Boden sich befindliche bzw. festsitzende Steine trifft, so daß das Bodenbearbeitungswerkzeug um einen gewissen Betrag nach hinten ausweichen kann, indem das Befestigungsteil sich wie eine Torsionsfeder innerhalb der Aufnahmeöffnung verdrehen kann. Dadurch, daß mit dem Bearbeitungsteil des Bodenbearbeitungswerkzeuges einstückig ausgebildete Befestigungsteil verbunden ist, ergibt sich in überraschend einfacher Weise eine sehr wirkungsvolle und einfache Federungsmöglichkeit für das Bodenbearbeitungswerkzeug, wenn es auf Steine oder andere im Boden befindliche Hindernisse trifft. Somit ist also das Bodenbearbeitungswerkzeug selbst als Federelement ausgebildet und durch die im äußeren radialen Bereich der Aufnahmeöffnung sich befindliche größere Aufnahmeöffnung wird eine äußerst wirksame und gegen äußere Einwirkungen unempfindliche Federung für die Werkzeugkreisel erreicht.

Um eine möglichst große Abfederung und einen möglichst langen Federweg bzw. große Federlänge für das Befestigungsteil des Bodenbearbeitungswerkzeuges zu erreichen, damit das Befestigungsteil sich über einen möglichst langen Weg verdrehen kann, ist erfindungsgemäß vorgesehen, daß die Aufnahmeöffnungen in den Werkzeugkreiseln für die Befestigungsteile sich zumindest etwa bis zur Mitte des Werkzeugkreisels erstrecken und daß die Befestigungsteile zumindest annähernd sich bis zur Mitte des Werkzeugkreisels in die Aufnahmeöffnungen hinein erstrecken. Darüber hinaus wird auch eine ausreichend sichere Befestigung des Bodenbearbeitungswerkzeuges an dem Werkzeugkreisel erreicht, da das Befestigungsteil über einen ausreichend langen Weg an seinem äußeren Ende in der Aufnahmeöffnung festgehalten wird. Hierbei weist dann die Aufnahmeöffnung etwa einen Querschnitt auf, der dem Querschnitt des Befestigungsteiles entspricht.

Hierbei ist dann erfindungsgemäß vorgesehen, daß die Aufnahmeöffnung in ihrem der Mitte des Werkzeugkreisels nächstliegenden Bereich einen Querschnitt aufweist, der zumindest annähernd dem Querschnitt der Befestigungsteile der Werkzeuge entspricht, und daß sich die Aufnahmeöffnungen in einem Abstand von der Mitte des Werkzeugkreisels in tangentialer Richtung vor allem in den seitlichen Bereichen der Aufnahmeöffnungen sich stufenweise oder zumindest annähernd kontinuierlich vergrößern. Hierdurch ergibt sich eine sehr vorteilhafte Ausbildung der Aufnahmeöffnungen, so daß einerseits der Zinken für normale Bodenverhältnisse in seiner vorgesehenen Position sicher gehalten wird und daß bei bei einem Auftreffen des Bodenbearbeitungswerkzeuges auf im Boden sich befindliche bzw. festsitzende Steine oder andere Hindernisse der Zinken nach hinten aufweisen kann, indem sich das Befestigungsteil innerhalb der Aufnahmeöffnung über einen Bereich der Aufnahmeöffnung verdrehen kann.

Hierbei ist dann erfindungsgemäß vorgesehen, daß jeweils von der Mitte der Aufnahmeöffnung aus die oberen und unteren Flächen der Aufnahmeöffnungen schräg nach oben oder unten verlaufen. Hierdurch ergibt sich eine sehr einfache Ausbildung der Aufnahmeöffnungen, die spiegelsymmetrisch zu der Mittellängsachse ist, so daß der Werkzeugkreisel mit der Aufnahmeöffnung in einfacher Weise als Schmiedeteil hergestellt werden kann. Hierbei ist dann vorgesehen, daß die Aufnahmeöffnung durch eine an dem Werkzeugkreisel angeschweißte Bodenplatte verschlossen und gebildet wird. Die Aufnahmeöffnung weist von der Seite aus in etwa radialer Richtung oder in Richtung der Drehachse des Werkzeugkreisels gesehen eine etwa X-förmigen Querschnitt auf, wobei dieser Querschnitt sich von außen nach innen in radialer Richtung erstreckt und in einem Abstand von der Drehachse des Werkzeugkreisels in einen zumindest annähernd den Querschnitt des inneren Teiles des Befestigungsteiles des Werkzeuges entsprechenden Querschnitt übergeht. Infolge dieser Maßnahme wird in überraschend einfacher Weise eine äußerst einfache und sichere Befestigung des Werkzeuges mit ausgezeichneten Federeigenschaften sowie Ausweichmöglichkeiten für das Bodenbearbeitungswerkzeug geschaffen.

Eine weitere Verbesserung wird in erfindungsgemäßer Weise noch dadurch erreicht, daß sich in der Mitte der Aufnahmeöffnung sich jeweils auf der unteren und der oberen Seite der Aufnahmeöffnung ein sich in radialer Richtung erstreckender Steg befindet, wobei der senkrechte Abstand zwischen dem oberen und dem unteren Steg zumindet annähernd der Höhe des Befestigungsteiles entspricht. Infolge dieser Maßnahme kann sich das Befestigungsteil des Bodenbearbeitungswerkzeuges sich auf diesem Steg abstützen und beim Auftreffen auf im Boden sich befindliche Steine oder Hindernisse über diesen Steg innerhalb der Aufnahmeöffnung verdrehen.

Um ein möglichst langes Befestigungsteil des Bodenbearbeitungswerkzeuges in der Aufnahmeöffnung des Werkzeugkreisels unterbringen zu können, so daß eine möglichst lange Verdrehlänge des Befestigungsteiles bei gleichzeitiger sicherer Befestigung des Befestigungsteiles innerhalb der Aufnahmeöffnung erreicht wird und die größtmögliche Länge des Befestigungsteiles zu verwirklichen, ist erfindungsgemäß vorgesehen, daß das Befestigungsteil auf seiner dem Werkzeug abgewandten Seite eine Aussparung aufweist, die der Kontur der Nabe des Werkzeugkreisels entspricht, daß die Aufnahmeöffnung sich bis zur Mitte der Werkzeugkreisel seitlich der Nabe des Werkzeugkreisels erstreckt, und daß die durch die Aussparung entstandenen Zungen des Befestigungsteiles sich seitlich der Nabe bis etwa zur Mitte des Werkzeugkreisels erstrecken.

Weiterhin sieht die Erfindung vor, um eine sichere Halterung bzw. Festhaltemöglichkeit für das Befestigungsteils bei gleichzeitigen ausreichend langen Verdrehweg des Befestigungsteiles des Bodenbearbeitungswerkzeuges zu erreichen, daß der größere Querschnitt der Aufnahmeöffnung sich zumindest über die halbe Länge der Aufnahmeöffnung des Befestigungsteiles jedoch nicht mehr als über vier Fünftel der Länge der Aufnahmeöffnung oder des Befestigungsteiles erstreckt.

Durch das deutsche Patent 28 49 869 ist bereits eine Bodenbearbeitungsmaschine mit mehreren in einer quer zur Fahrtrichtung verlaufenden Reihe nebeneinander angeordneten Werkzeugkreiseln, die nach unten gerichtete Bodenbearbeitungswerkzeuge aufweisen, bekannt. Diese Bodenbearbeitungswerkzeuge sind an einem horizontal liegenden und sich quer zur Drehachse der Werkzeugkreisel erstreckendem Federpaket befestigt, so daß diese Bodenbearbeitungswerkzeuge beim Auftreffen auf im Boden sich befindliche Steine oder andere Hindernisse nach hinten ausweichen können, indem das Federpaket, an dem die Werkzeuge befestigt sind, verdreht wird. Diese Anordnung der Bodenbearbeitungswerkzeuge an Blattfederpaketen ist konstruktiv sehr aufwendig und teuer. Weiterhin sind die Bodenbearbeitungswerkzeuge nur in zeitraubender und aufwendiger Weise auszutauschen, wenn die Bodenbearbeitungswerkzeuge verschlissen sind.

Des weiteren sieht die Erfindung vor, damit auch unter extremsten Bedingungen keine Beschädigung an den Zinken oder der Maschine auftritt, daß die Aufnahmeöffnung ·für den Befestigungsteil des Werkzeuges sich zumindest annähernd über den gesamten Durchmesser des Werkzeugkreisels erstreckt, und daß sich die Aufnahmeöffnung von dem Anfang des Befestigungsteiles aus in Richtung der des Werkzeuges zugewandten Seite sich stetig auf ihrer Ober- und Unterseite zumindest in den seitlichen Bereichen der Aufnahmeöffnung erweitert. Hierdurch wird ein äußerst langer Befestigungsteil, der sich praktisch über die gesamte Breite bzw. den Durchmesser des Werkzeugkreisels erstreckt und der sich in der Aufnahmeöffnung praktisch über die gesamte Länge der Aufnahmeöffnung verdrehen kann, geschaffen. Somit ergibt sich eine sehr große Ausweichmöglichkeit für den Bodenarbeitungsteil des Bodenbearbeitungszinkens, wenn er auf einen im Boden festsitzenden Stein auftrifft. Beim Auftreffen des Zinkens auf einen im Boden festsitzenden Stein weicht der Werkzeugteil nach hinten aus, so daß er·sehr leicht über diesen Stein hinweggleiten kann. Beschädigungen am Zinken, am Werkzeugkreisels bzw. an der gesamten Maschine werden vermieden. Damit der Befestigungsteil sich in der Aufnahmeöffnung in vorteilhafter Weise beim Auftreffen auf einen Stein in vorteilhafter Weise elastisch verformen kann, ist erfindungsgemäß vorgesehen, daß die Aufnahmeöffnung über zumindest zwei Drittel ihrer Länge einen sich erweiternden X-förmigen Querschnitt aufweist.

In einer Ausführungsform ist vorgesehen, daß jeder Werkzeugkreisel zwei Aufnahmeöffnungen aufweist, die untereinanderliegend angeordnet sind. In einer anderen Ausführungsform ist erfindungsgemäß vorgesehen, daß jeder Werkzeugkreisel zwei Aufnahmeöffnungen aufweist, die nebeneinanderliegend angeordnet sind. Hierdurch wird ein äußerst kompakt und flach bauender Werkzeugkreisel geschaffen.

Weitere Einzelheiten der Erfindung sind den übrigen Unteransprüchen, der Beispielsbeschreibung und den Zeichnungen zu entnehmen. Hierbei zeigen

Fig. 1 eine erfindungsgemäß ausgebildete Bodenbearbeitungsmaschine mit hinter der Bodenbearbeitungsmaschine angeordneter Packerwalze in der Vorderansicht,

Fig. 2 einen erfindungsgemäß ausgebildeten Werkzeugkreisel mit Werkzeugen in der Vorderansicht und im Teilschnitt,

Fig. 3 den Werkzeugkreisel gemäß Fig. 2 in der Ansicht von unten,

Fig. 4 einen weiteren Werkzeugkreisel in der Vorderansicht und im Teilschnitt,

Fig. 5 eine weitere erfindungsgemäß ausgebildete Bodenbearbeitungsmaschine mit hinter der Bodenbearbeitungsmaschine angeordneter Nachlaufwalze in der Vorderansicht,

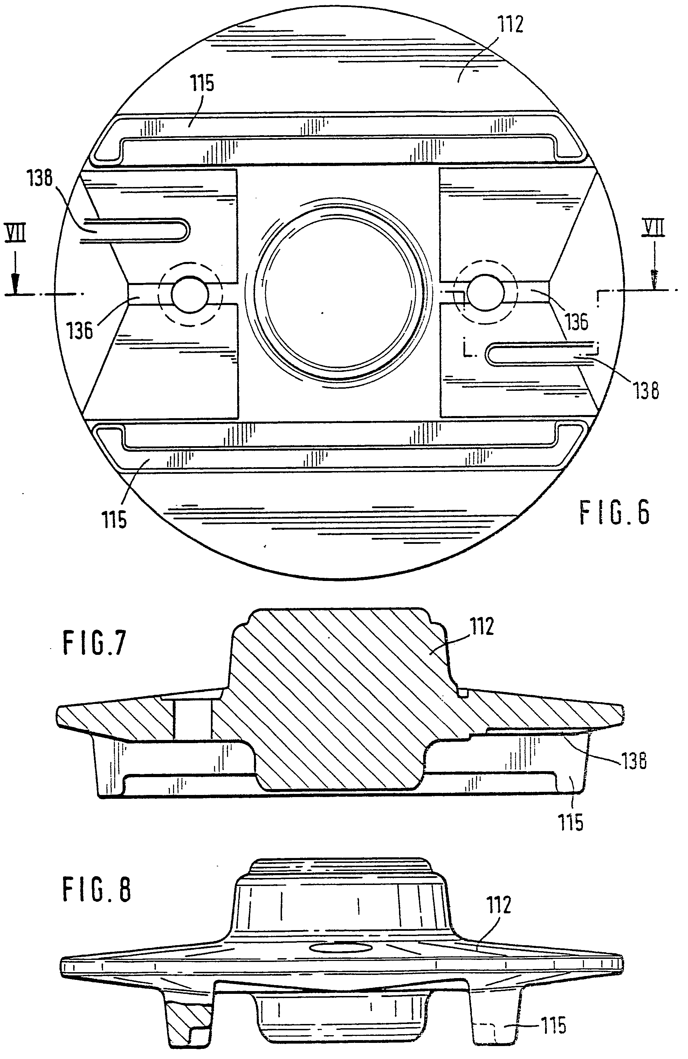

Fig. 6 das Oberteil eines Werkzeugkreisels gemäß Fig 5 ohne Bodenplatte in der Ansicht von unten,

Fig. 7 das Oberteil des Werkzeugkreisels gemäß Fig. 6 in der Ansicht VII-VII,

Fig. 8 das Oberteil des Werkzeugkreisels gemäß Fig. 5 in der Seitenansicht,

Fig. 9 die Bodenplatte des Werkzeugkreisels gemäß Fig. 5 in der Draufsicht,

Fig. 10 die Bodenplatte des Werkzeugkreisels gemäß Fig. 5 in der Seitenansicht,

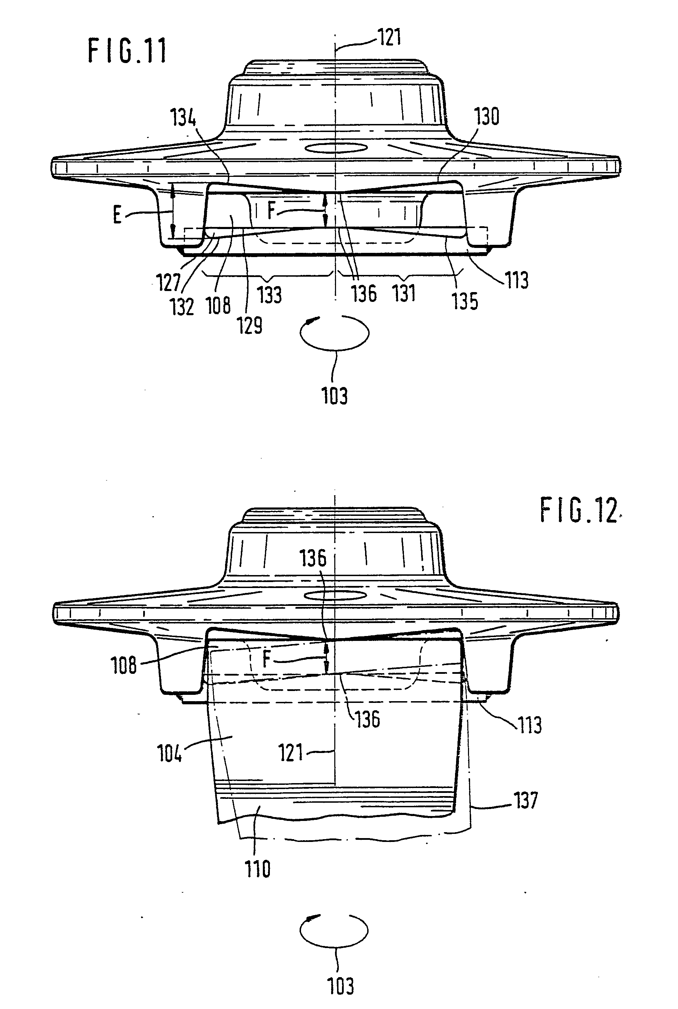

Fig. 11 der komplette Werkzeugkreisel gemäß Fig. 5 in der Seitenansicht,

Fig. 12 der komplette Werkzeugkreisel gemäß Fig. 5 mit Bodenbearbeitungswerkzeugen in der Seitenansicht,

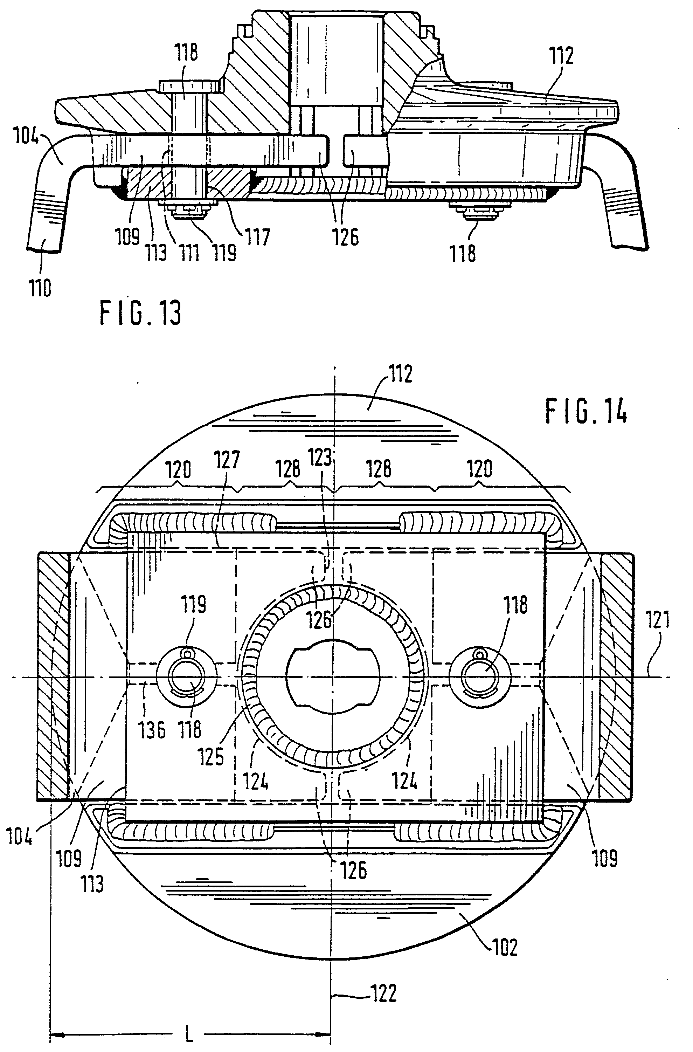

Fig. 13 der Werkzeugkreisel gemäß Fig. 5 mit Bodenbebeitungswerkzeugen in der Vorderansicht im Teilschnitt,

Fig. 14 einen Werkzeugkreisel gemäß Fig. 5 mit Bodenbearbeitungswerkzeugen in der Ansicht von unten,

Fig. 15 einen weiteren erfindungsgemäß ausgebildeten Werkzeugkreisel mit Werkzeugen einer Kreiselegge in der Seitenansicht und im Schnitt,

Fig. 16 den Werkzeugkreisel gemäß Fig. 15 in der Draufsicht,

Fig. 17 den Werkzeugkreisel gemäß Fig. 15 in der Seitenansicht von rechts und

Fig. 18 einen anderen erfindungsgemäßen Werkzeugkreisel mit Werkzeugen einer Kreiselegge in der Ansicht von unten.

Die Bodenbearbeitungsmaschine kann entweder als Kreiselgrubber oder als Kreiselegge ausgebildet sein. Der wesentliche Unterschied zwischen einem Kreiselgrubber und einer Kreiselegge besteht in der Anordnung der Werkzeuge. Wenn die Werkzeugspitzen in Drehrichtung gesehen auf Griff stehen, bezeichnet man diese Maschine als Kreiselgrubber, wenn jedoch die Werkzeugspitzen in Drehrichtung gesehen nachlaufen; d. h. schleppend angeordnet sind, spricht man von einer Kreiselegge.

Die Bodenbearbeitungsmachine weist das Gestell 1 auf, in dem in einer quer zur Fahrtrichtung verlaufenden Reihe nebeneinander die Werkzeugkreisel 2 angeordnet sind. Die Werkzeugkreisel 2 werden von der Zapfwelle des die Bodenbearbeitungsmaschine fortbewegenden Schleppers angetrieben, wobei die jeweils einander benachbarten Werkzeugkreisel 2 im entgegengesetzten durch den Pfeil 3 gekennzeichneten Drehsinn um aufrechte Achsen rotieren. Die Werkzeugkreisel 2 sind tellerförmig ausgebildet. An diesen Werkzeugkreiseln 2 sind die nach unten ragenden Werkzeuge 4 befestigt. Seitlich neben den jeweils äußeren Werkzeugkreiseln 2 ist das Seitenblech 5 angeordnet, welches jeweils die Verlagerung der Erde nach außen begrenzt. Hinter der Bodenbearbeitungsmaschine ist die Packerwalze 6 mit ihrem auf dem Umfang angeordneten Zacken 7 angeordnet.

Die Werkzeugkreisel 2 weisen radial nach außen weisende Aufnahmeöffnungen 8 für das jeweilige Befestigungsteil 9 der Werkzeuge 4 auf. Die Werkzeuge 4 weisen jeweils ein Bearbeitungsteil 10, welches den Boden bearbeitet und ein etwa rechtwinklig zu dem Bearbeitungsteil 10 abgewinkeltes Befestigungsteil 9 auf. Dieses Befestigungsteil 9 weist die beiden Bohrungen 11 auf.

Der Werkzeugkreisel 2 besteht aus dem oberen Schmiedeteil 12, welches eine zentrale Bohrung zur Befestigung an einer Antriebswelle eines nicht dargestellten Getriebes, welches in dem Gestell 1 angeordnet ist, aufweist, und aus der an dem Schmiedeteil 12 angeschweißten Platte 13. Auf der Unterseite des Schmiedeteiles 12 des Werkzeugkreisels 2 sind jeweils zur Bildung der Aufnahmeöffnung 8 die nach unten gerichtete Stege 15 an dem Schmiedeteil einstückig angeordet. Auf der Unterseite der Stege 15 ist die die jeweils vier sich auf der Unterseite befindlichen 15 verbindende Platte 13 aufgeschweißt. Die Platte 15 weist in ihrer Mitte eine große zentrale Bohrung 16 auf, so daß innerhalb dieser zentralen Bohrung 16 das Befestigungselement zur Sicherung des Werkzeugkreisels 2 auf der Antriebswelle angeordnet werden kann. Weiterhin weist diese Platte im Bereich jeder Aufnahmeöffnung zwei Bohrungen 17 auf, die mit den jeweiligen Bohrungen, die in dem Schmiedeteil 12 im Bereich der Aufnahmeöffnung angeordnet sind, fluchten. Weiterhin fluchten diese Bohrungen 17 mit den Bohrungen 11 in dem Befestigungsteil 9 der Werkzeuge 4, wenn das Befestigungsteil 9 der Werkzeuge 4 in diese Aufnahmeöffnungen gesteckt ist.

Die Aufnahmeöffnungen 8 weisen einen etwas größeren Querschnitt als das Befestigungsteil 9 des Werkzeuges auf. Somit sind die in diesen Aufnahmeöffnungen 8 angeordneten Befestigungsteile der Werkzeuge mit einem gewissen Spiel angeordnet, so daß die Werkzeuge leicht lösbar in diesen Aufnahmeöffnungen angeordnet sind. Die Befestigungsteile 9 der Werkzeuge werden durch die beiden durch die Bohrungen 11 und 17 gesteckten Bolzen 18 leicht lösbar in der Aufnahmeöffnung der Werkzeugkreisel 2 gehalten. Die Bolzen 18 sind mitels der als Splinte 19 ausgebildeten Schnellverschlüsse in den Bohrungen des Werkzeugkreisels gesichert. Die Bolzen 18 sind auf der Oberseite des Werkzeugkreisels 2 versenkt angeordnet. Die Versenkung 20 ist als Sechskant ausgebildet, so daß der sich an der Oberseite des Bolzens 18 befindliche Sechskant 21 drehfest in der jeweiligen Bohrung 17 angeordnet ist, so daß er sich nicht verdrehen kann.

Vor allem wenn die Bodenbearbeitungsmaschine auf steinigen Böden eingesetzt werden soll, ist es sinnvoll, daß auf der Unterseite des Werkzeugkreisels vor den Schnellverschlüssen 19 jeweils ein mit gestrichelten Linien angedeuteter stehender Schutzschirm 22 angeordnet ist.

Die gleiche Schutzwirkung kann dadurch erreicht werden, daß die Splinte 19 ebenfalls in einer Versenkung, die in der Platte 13 angeordnet sein könnte, angeordnet sind.

Die Werkzeugkreisel 2 weisen einen Durchmesser D auf, der in etwa dem Abstand A zwischen den oberen äußeren Teilen der Werkzeuge 4 entspricht. Hierzu weisen die Werkzeugkreisel 2 den schmalen umlaufenden Ring 23 auf. Somit wird erreicht, daß zwischen den einzelnen nebeneinander angeordneten Werkzeugkreiseln 2 nur ein kleiner Abstand B sich befindet, so daß sich keine Steine zwischen den einzelnen nebeneinander angeordneten Werkzeugkreiseln 2 einklemmen können. Somit können keine Beschädigungen an den Werkzeugkreiseln 2 durch Einklemmen von Steinen zwischen diesen auftreten.

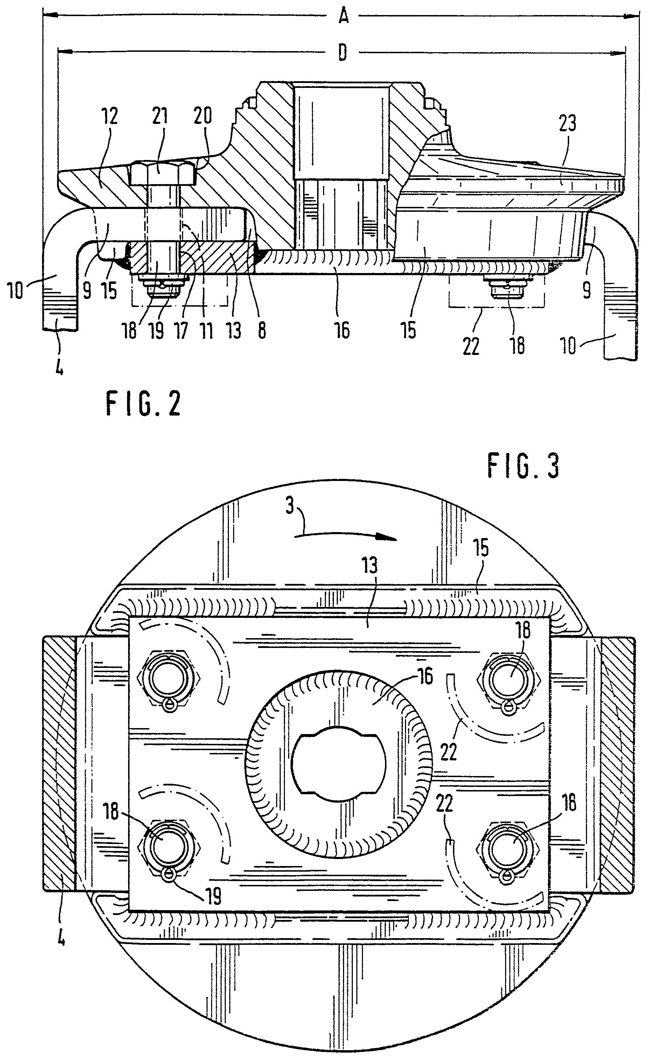

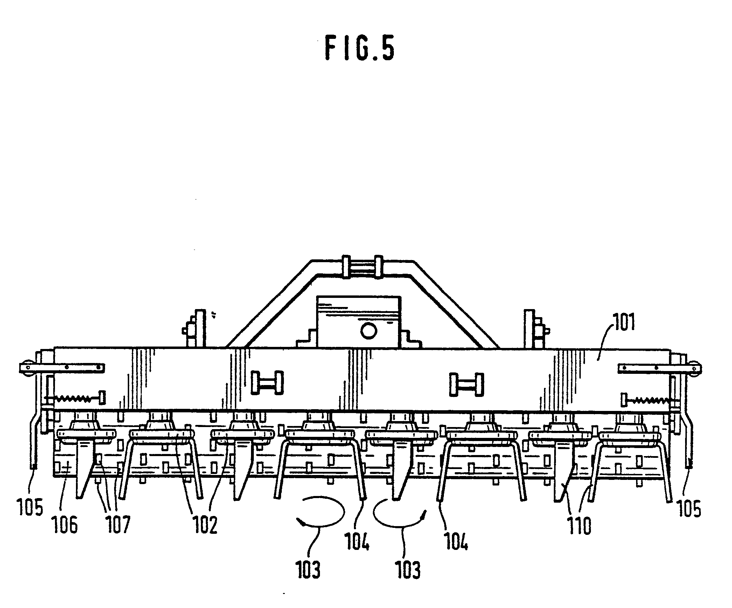

Der Werkzeugkreisel gemäß Fig. 4 unterscheidet sich von dem Werkzeugkreisel gemäß Fig. 2 lediglich durch die Ausbildung der Sicherungsbolzen. Diese Sicherungsbolzen 24 sind als Schrauben ausgebildet, wobei die Schrauben auf der Unterseite des Werkzeugkreisels durch Muttern 25 gesichert werden. Vorzugsweise sind diese Muttern 25 als selbstsichernde Muttern ausgebildet. Da diese Sicherungsschrauben relativ klein dimensioniert ausgebildet werden können, können diese Sicherungsschrauben, falls der Sechskant der Muttern durch Bodenberührung bzw. durch Aufprall von Steinen beschädigt bzw. abgeschliffen ist, in einfacher Weise durch Abschlagen mit einem Meißel entfernt werden. Somit lassen sich auch bei diesem Ausführungsbeispiel die Werkzeuge 4 in sehr kurzer Zeit in einfacher Weise erneuern.

Um die Werkzeuge 4 austauschen zu können, sind in einfacher Weise die Schnellverschlüsse aus den Bolzen zu entfernen. Da die Bolzen 18 und 24 mit einem Spiel in ihren Bohrungen und in dem Befestigungsteil 9 angeordnet sind, lassen sie sich einfach ohne große Kraftaufwendung entfernen. Da die Befestigungsteile 9 der Werkzeuge 4 mit einem gewissen Spiel in den Aufnahmeöffnungen 8 der Werkzeugkreisel 2 angeordnet sind, können die Werkzeuge sehr einfach aus den Aufnahmeöffnungen 8 der Werkzeugkreisel 2 herausgezogen werden. Anschließend werden die Befestigungsteile der neuen Werkzeuge 4 einfach von außen in die Aufnahmeöffnung 8 hineingesteckt. Anschließend werden die Werkzeuge 2 durch Hineinstecken der Bolzen 18 oder 24 in die dafür vorgesehenen Bohrungen in dem Werkzeugkreisel 2 und in dem Befestigungsteil 9 der Werkzeuge 4 gesichert. Diese Bolzen 18 oder 24 werden dann entweder durch einen Splint 19 oder durch eine Mutter 25 gesichert. In kürzester Zeit können also die Werkzeuge 4 ohne große Kraftanstrengung ausgetauscht werden. Diese Austauscharbeiten sind sogar von dem Landwirt auf dem Acker vorzunehmen.

Die als Kreiselegge oder als Kreiselgrubber gemäß Fig. 5 ausgebildete Bodenbearbeitungsmaschine weist das Gestell 101 auf, in dem in einer quer zur Fahrtrichtung verlaufenden Reihe nebeneinander die Werkzeugkreisel 102 angeordnet sind. Die Werkzeugkreisel 102 werden von der Zapfwelle des die Bodenbearbeitungsmaschine fortbewegenden Schleppers angetrieben, wobei die jeweils einander benachbarten Werkzeugkreisel 102 im entgegengesetzten durch den Pfeil 103 gekennzeichneten Drehsinn um aufrechte Achsen rotierend angetrieben werden. Die Werkzeuge 102 sind tellerförmig ausgebildet. An diesen Werkzeugkreiseln 102 sind die nach unten ragenden als Messer bzw. als Zinken ausgebildeten Bodenbearbeitungswerkzeuge 104 befestigt. Seitlich neben den jeweils äußeren Werkzeugkreiseln 102 ist ein Seitenblech 105 angeordnet, welches jeweils die Verlagerung der Erde nach außen begrenzt. Hinter der Bodenbearbeitungsmaschine ist die Packerwalze 106 mit ihrem auf dem Umfang angeordneten Zacken 107 angeordnet.

Die Werkzeugkreisel 102 weisen radial nach außen gerichtet Aufnahmeöffnungen 108 für das jeweilige Befestigungsteil 109 der Bodenbearbeitungswerkzeuge 104 auf. Die Bodenbearbeitungswerkzeuge 104 weisen jeweils ein Bearbeitungsteil 110, welches den Boden bearbeitet und ein etwa rechtwinklig zu dem Bodenbearbeitungsteil 110 abgewinkeltes Befestigungsteil 109 auf. Dieses Befestigungsteil 109 weist eine Bohrung 111 auf.

Jeder Werkzeugkreisel 102 besteht aus dem oberen Schmiedeteil 112, welches eine zentrale Bohrung zur Befestigung an einer Antriebswelle der nicht dargestellten Getriebe, welche in dem Gestell 101 angeordnet sind, aufweist, und aus der an dem Schmiedeteil 112 angeschweißten Bodenplatte 113. Auf der Unterseite des Schmiedeteiles 112 der Werkzeugkreisel 102 sind jeweils zur Bildung der Aufnahmeöffnung 108 die nach unten gerichteten Stege 115 an dem Schmiedeteil 112 einstückig angeordnet. Auf der Unterseite der Stege 115 ist die die Stege jeweils miteinander verbindende Platte 113 aufgeschweißt. Die Platte 113 weist in ihrer Mitte eine große zentrale Bohrung 116 auf, so daß innerhalb dieser zentralen Bohrung 116 das Befestigungselement zur Sicherung des Werkzeugkreisels 102 auf der Antriebswelle des Werkzeugkreisels angeordnet werden kann. Weiterhin weist diese Platte im Bereich jeder Aufnahmeöffnung die Bohrung 117 auf, die mit der jeweiligen Bohrung, die in dem Schmiedeteil 112 im Bereich der Aufnahmeöffnung angeordnet ist, fluchten. Weiterhin fluchtet diese Bohrung 117 mit der jeweiligen Bohrung 111 in dem Befestigungsteil 109 der Werkzeuge 104, wenn das Befestigungsteil 109 der Werkzeuge 104 in diese Aufnahmeöffnungen gesteckt ist.

Die Aufnahmeöffnungen 108 weisen einen größeren Querschnitt als das Befestigungsteil 109 des Bodenbearbeitungswerkzeuges 4 auf. Somit sind die in diesen Aufnahmeöffnungen 108 angeordneten Befestigungsteile 109 der Werkzeuge 104 mit einem gewissen Spiel angeordnet, so daß die Bodenbearbeitungswerkzeuge 104 leicht lösbar in diesen Aufnahmeöffnungen angeordnet sind. Die Befestigungsteile 109 der Werkzeuge werden durch die durch die Bohrungen 111 und 117 gesteckten Bolzen 118 leicht lösbar in der Aufnahmeöffnung der Werkzeugkreisel 102 gehalten. Die Bolzen 118 sind mittels der als Splinte 119 ausgebildeten Stellverschlüsse in den Bohrungen des Werkzeugkreisels 102 gesichert.

Die Aufnahmeöffnung 108 weist in ihrem äußeren radialen Bereich 120 von der Mitte 121 der Aufnahmeöffnung 108 in tangentialer Richtung gesehen eine wesentlich größere Höhe $E$ als die Höhe $F$ der Verfestigungsteile 109 der Bodenbearbeitungswerkzeuge 104 auf. Die Aufnahmeöffnungen 108 in den Werkzeugkreiseln 102 für die Befestigungsteile 108 erstrecken sich jeweils bis zur Mitte 122 des Werkzeugkreisels 102 und die Befestigungsteile 109 der Bodenbearbeitungswerkzeuge 104 ragen ebenfalls bis zur Mitte 122 des Werkzeugkreisels 102 in die Aufnahmeöffnungen 108 hinein. Hierzu weist das Befestigungsteil auf seiner dem Bodenbearbeitungsteil 110 abgewandten Seite 123 die Aussparung 124 auf, die der Kontur der Nabe 125 des Werkzeugkreisels 102 entspricht. Die durch die Aussparung 124 entstandenen Zungen 126 des Befestigungsteiles 109 erstrecken sich seitlich der Nabe 124 bis zur Mitte 122 des Werkzeugkreisels 102. Der größere äußere Querschnitt 127 der Aufnahmeöffnung 108 erstreckt sich über mehr als die halbe Länge $L$ der Aufnahmeöffnung 108 oder des Befestigungsteiles 109, jedoch nicht mehr als über vier Fünftel der Länge $L$ der Aufnahmeöffnung 108 oder des Befestigungsteiles 109 des Bodenbearbeitungswerkzeuges 104.

Die Aufnahmeöffnungen 108 in den Werkzeugkreiseln 102 für die Aufnahme des Befestigungsteiles 109 des Bodenbearbeitungswerkzeuges 104 weisen in ihrem der Mitte 122 des Werkzeugkreisels 102 nächstliegenden Bereich 128 einen Querschnitt 129 auf, der zumindest annähernd dem Querschnitt der Befestigungsteile 109 der Bodenbearbeitungswerkzeuge 104 entspricht. In einem Abstand von der Mitte 122 des Werkzeugkreisels 102 weist die Aufnahmeöffnung 108 einen größeren Querschnitt 127 auf. Dieser größere Querschnitt 127 der Aufnahmeöffnung 108 vergrößert sich von der Mitte 121 der Aufnahmeöffnung 108 in tangentialer Richtung, vor allem in den seitlichen Bereichen der Aufnahmeöffnung. Die obere Fläche 130 der in Drehrichtung 103

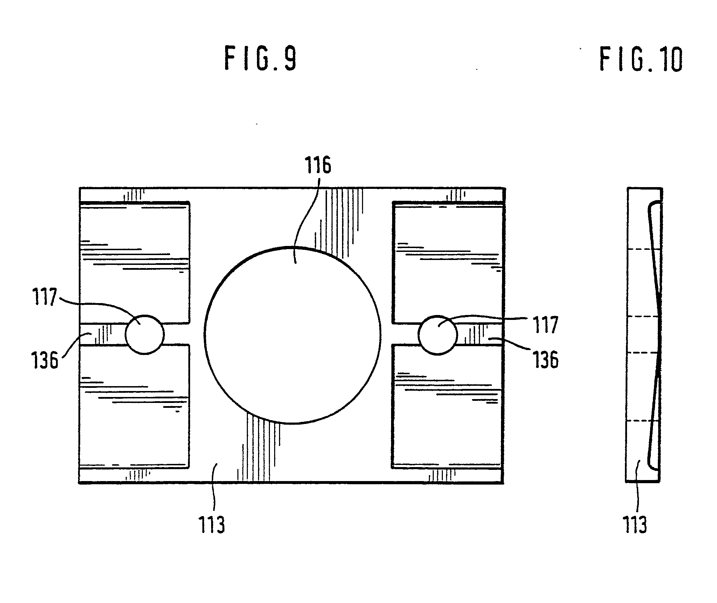

gesehen hinteren Hälfte 131 der Aufnahmeöffnung 108 verläuft etwa von der Mitte 121 der Aufnahmeöffnung 108 schräg nach oben und die untere Fläche 132 der in Drehrichtung 103 gesehen vorderen Hälfte 133 der Aufnahmeöffnung 108 verläuft von der Mitte 121 der Aufnahmeöffnung 108 schräg nach unten. Weiterhin verlaufen jeweils von der Mitte 121 der Aufnahmeöffnung 108 aus die oberen und unteren Flächen 130, 132, 134 und 135 der Aufnahmeöffnung 108 jeweils schräg nach oben oder unten. Somit weist die Aufnahmeöffnung 108 von der Seite aus in radialer Richtung oder in Richtung der Drehachse des Werkzeugkreisels 102 gesehen einen etwa X-förmigen Querschnitt 127 auf, wobei dieser Querschnitt 127 sich von außen nach innen in radialer Richtung erstreckt und in einem Abstand von der Drehachse des Werkzeugkreisels 102 in einem zumindest annähernd dem Querschnitt des inneren Teiles 126 des Befestigungsteiles 109 des Werkzeuges 104 entsprechenden Querschnitt 129 übergeht. In der Mitte 121 der Aufnahmeöffnung 108 befinden sich jeweils auf der unteren und der oberen Seite der Aufnahmeöffnung 108 die sich jeweils in radialer Richtung erstreckenden Stege 136. Der senkrechte Abstand zwischen dem oberen und dem unteren Steg 136 entspricht der Höhe F des Befestigungsteiles 109. Somit stützt sich im normalen Betrieb das Befestigungsteil 109 des jeweiligen Bodenbearbeitungswerkzeuges 104 an diesen Stegen 136 ab und wird von den in den inneren Querschnitt 127 fassenden Zungen 126 des Befestigungsteiles 109 in die in Fig. 8 mit durchzogenen Linien dargestellte Position gehalten.

Trifft nun das Bodenbearbeitungswerkzeug 104 auf ein im Boden befindliches Hindernis, wie Steine, Wurzeln etc. so kann das Befestigungsteiles 109 des Bodenbearbeitungswerkzeuges 104 aufgrund der X-förmigen Ausbildung des äußeren Bereiches der Aufnahmeöffnung 108 sich innerhalb des äußeren Bereiches der Aufnahmeöffnung 108 in sich federnd verdrehen, so daß der Bearbeitungsteil 110 des Bodenbearbeitungswerkzeuges 104 in die in mit strichpunktierten Linien dargestellte Position 137 schwenken kann.

In den oberen Flächen 130 und 134 der Aufnahmeöffnung 108 sind die Nutenförmigen Vertiefungen 138 mit durch Schmieden angebracht. In diesen Vertiefungen 138 fassen die auf dem Befestigungsteil 109 angeordneten und erhöht ausgebildeten Erhebungen. Hierdurch wird erreicht, daß man die Bodenbearbeitungswerkzeuge auf die Drehrichtung der Werkzeugkreisel 102 bezogen immer richtig montiert. Um verschiedene Werkzeuge 104 vorschriftsmäßig zu montieren, kann der Abstand der Vertiefungen 138 von der Mitte der Aufnahmeöffnungen bei den linksdrehenden Werkzeugkreiseln ein anderes Maß als der Abstand bei den rechtsdrehenden Werkzeugkreiseln aufweisen. Weiterhin sind die Vertiefungen 138 bei den linksdrehenden Werkzeugkreiseln 102 spiegelbildich zu den beiden rechtsdrehenden Werkzeugkreiseln 102 angeordnet.

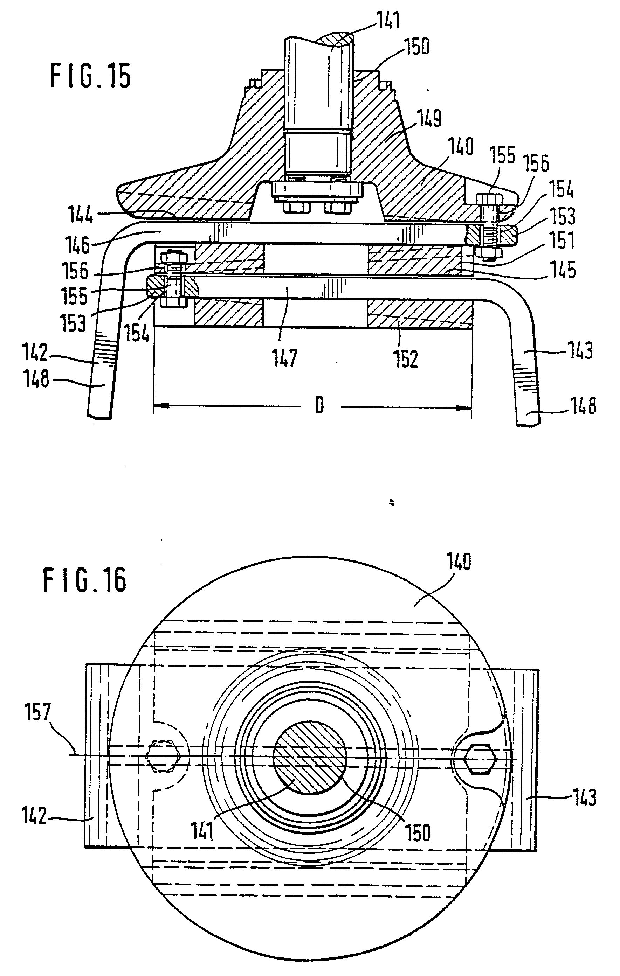

Der Werkzeugkreisel 140 gemäß den Fig. 15 bis 17 ist auf der drehbar angetriebenen Welle 141 angeordnet. Die Welle 141 der Kreiselegge wird über ein Getriebe von der Zapfwelle des die Kreiselegge ziehenden Schleppers angetrieben. Die Kreiselegge weist mehrere in einer quer zur Fahrtrichtung verlaufenden Reihe nebeneinander angeordnete Wellen 141 auf, an denen die Werkzeugkreisel 140 befestigt sind. Die Werkzeugkreisel 140 sind in der Draufsicht gesehen tellerförmig ausgebildet. An diesen Werkzeugkreiseln 140 sind die nach unten ragenden als Zinken ausgebildeten Bodenbearbeitungswerkzeuge 142 und 143 befestigt. Die Werkzeugkreisel 140 weisen radial nach außen gerichtete Aufnahmeöffnungen 144 und 145 für das jeweilige Befestigungsteil 146 und 147 der Zinken 142 und 143 auf. Die Bodenbearbeitungszinken 142 und 143 weisen jeweils das schräg nach unten gerichtete Bearbeitungsteil 148 sowie ein etwa rechtwinklig zu dem Bearbeitungsteil 148 abgewinkeltes Befestigungsteil 146 und 147 auf.

Jeder Werkzeugkreisel 140 besteht aus dem oberen Schmiedeteil 149, welches eine zentrale Bohrung 150 zur Befestigung des Werkzeugkreisels 140 an der Antriebswelle 141 des nicht dargestellten Getriebes, aufweist. Des weiteren besteht dieser Werkzeugkreisel zusätzlich aus den an dem Schmiedeteil 149 angeschweißten Bodenplatten 151 und 152. Die Werkzeugkreisel 140 weisen für jedes Befestigungsteil 146 und 147 der Bodenbearbeitungszinken 142 und 143 die übereinander liegenden Aufnahmeöffnungen 144 und 145 für die Befestigungsteile 146 und 147 der Bodenbearbeitungszinken 142 und 143 auf. Die Aufnahmeöffnungen 144 und 145 für die Befestigungsteile 146 und 147 der Bodenbeabeitungszinken 142 und 143 erstrecken sich über den gesamten Durchmesser D des Werkzeugkreisels 140. Am Anfang 153 weisen die Befestigungsteile 146 und 147 die Bohrung 154 auf. Durch diese Bohrung 154 ist jeweils ein Schraubbolzen 155 gesteckt. Dieser Schraubbolzen 155 ist ebenfalls durch die sich im Werkzeugkreisel 140 befindliche Bohrung 156 gesteckt, so daß die Werkzeuge 142 und 143 durch diesen Schraubbolzen 155 jeweils im Werkzeugkreisel 140 gesichert und gehalten werden.

Im Bereich des Anfanges 153 des Befestigungsteiles 146 bzw. 147 der Bodenbearbeitungszinken 142 und 143 weist die Aufnahmeöffnung 144 bzw. 145 einen dem Befestigungsteil 146 bzw. 147 entsprechenden Querschnitt auf, wobei der Anfang des Befestigungsteiles jeweils mit einem kleinen Spiel in diesen Teilen der Aufnahmeöffnung einfaßt.

Die Aufnahmeöffnungen 144 und 145 erweitern sich in Richtung der des Bodenbearbeitungsteiles 148 zugewandten Seite auf ihrer Ober- und Unterseite in den seitlichen Bereiches der Aufnahmeöffnungen. In der Mitte der Aufnahmeöffnung weisen die Aufnahmeöffnungen 144 und 145 einen Abstand zueinander auf, der etwa der Höhe des Befestigungsteiles 146 und 147 der Boden-arbeitungszinken 142 und 143 entspricht, damit die Bodenbearbeitungszinken 142 und 143 bzw.

deren Befestigungsteile 146 und 147 eine Anlagefläche haben. Durch die Erweiterung im seitlichen Bereich der Aufnahmeöffnung ergibt sich ein X-förmiger Querschnitt der Aufnahmeöffnung, wobei sich dieser stetig erweiternde X-förmige Querschnitt sich zumindest über zwei Drittel der Länge, die in etwa dem Durchmesser D des Werkzeugkreiseles 140 im Bereich der Aufnahmeöffnungen entspricht, erstreckt. Die Aufnahmeöffnungen 144 und 145 des Werkzeugkreisels 140 sind untereinanderliegend angeordnet.

Durch diese Art der Ausbildung der Aufnahmeöffnungen 144 und 145, die einen sich in Richtung des Bearbeitungsteiles 148 der Bodenbearbeitungszinken 142 und 143 sich stetig erweiternden X-förmigen Querschnitt aufweist, wobei die Erweiterung sich im wesentlichen von dem Beginn des Befestigungsteiles in Richtung des Bodenbearbeitungsteiles im seitlichen Bereich sowie sich von der Mitte der Aufnahmeöffnung nach außen erstreckend sich erweitert, wird erreicht, daß sich das Befestigungsteil 146 bzw. 147 innerhalb der Aufnahmeöffnung um die Mittelachse 157 der jeweiligen Aufnahmeöffnung 144 und 145 federnd verdrehen kann. Hierdurch können die Bearbeitungsteile 148 der Bodenbearbeitungszinken 142 und 143 entgegen der Fahrtrichtung elastisch ausweichen und wieder in ihre Normalposition nach dem Überschreiten des im Boden festsitzenden Hindernisses zurückfedern.

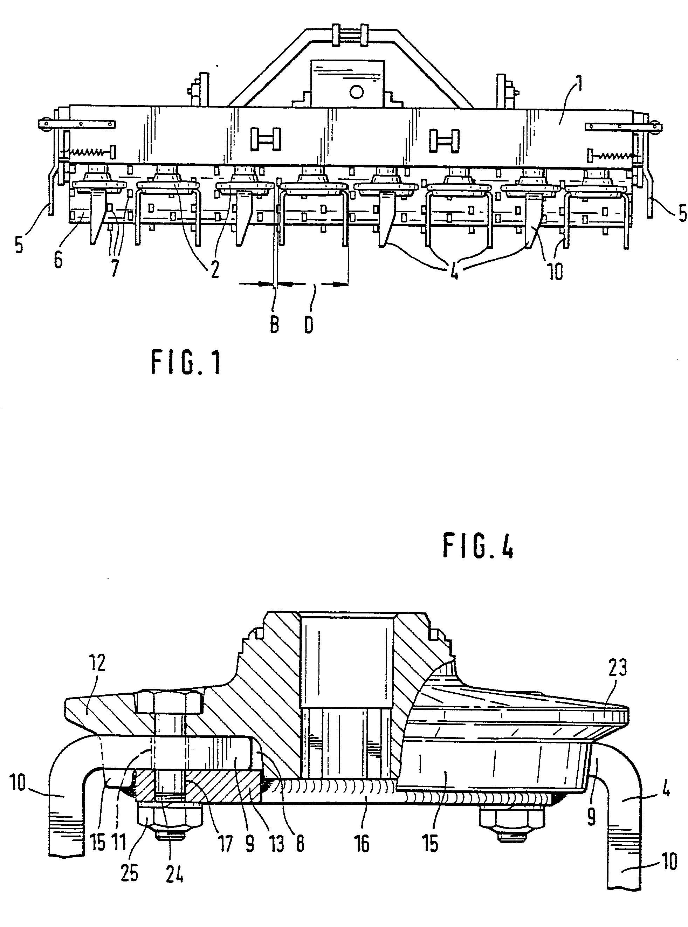

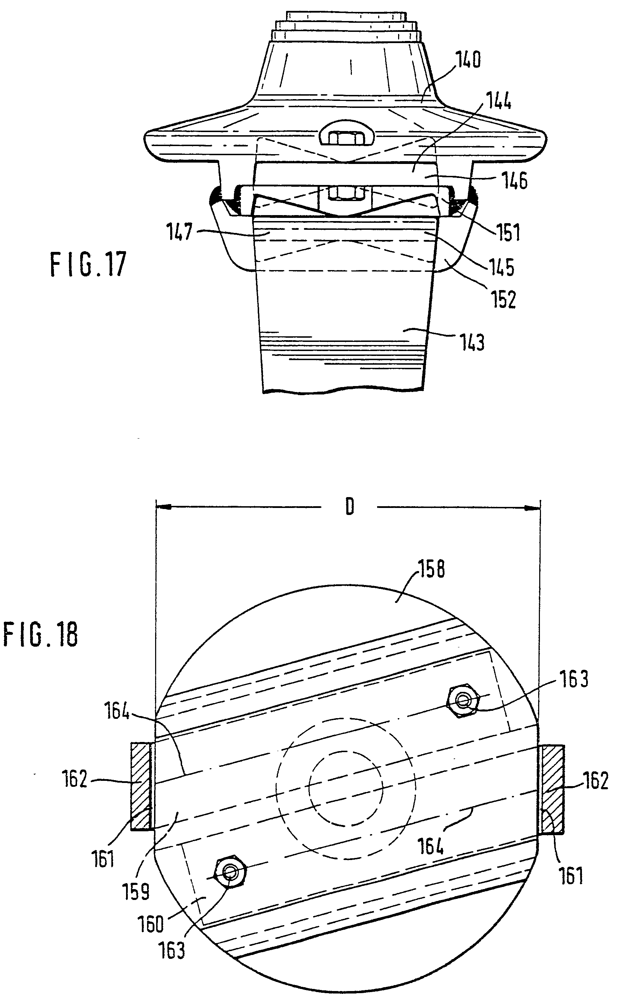

Der Werkzeugkreisel 158 gemäß Fig. 18 unterscheidet sich von dem Werkzeugkreisel 140 gemäß den Fig. 1 bis 3 im wesentlichen dadurch, daß die Aufnahmeöffnungen 159 und 160 für die Befestigungsteile 161 der Bodenbearbeitungszinken 162 nicht untereinanderliegend, sondern in der Draufsicht bzw. in der Ansicht von unten nebeneinanderliegend in dem Werkzeugkreisel 158 angeordnet sind. Die Bodenbearbeitungszinken 162 werden von den die Befestigungsteile 161 der Bodenbearbeitungszinken 162 sowie dem Werkzeugkreisel 158 durchsetzenden Bolzen 163 gehalten. Die Aufnahmeöffnungen 159 und 160 für die Aufnahme der Befestigungsteile 161 der Bodenbearbeitungszinken 162 erstrecken sich etwa über den gesamten Durchmesser D des Werkzeugkreisel 158. Des weiteren erweitert sich die Aufnahmeöffnung 159 bzw. 160 von dem Anfang des Befestigungsteiles aus in Richtung der des Bodenbearbeitungszinkens 162 zugewandten Seite stetig auf ihrer Ober- und Unterseite von der Mittellinie 164 der Aufnahmeöffnung 159 und 160 aus in Richtung ihrer seitlichen Bereiche. Somit ergibt sich in der Seitenansicht gesehen für die Aufnahmeöffnung 159 und 160 ein sich vom Anfang des Befestigungsteiles, bzw. den Bolzen 163 aus gesehen, ein sich ständig erweiternder X-förmiger Querschitt der Aufnahmeöffnungen für die Befestigungsteile 161 der Bodenbearbeitungszinken 162, so daß sich die Befestigungsteil 161 der Bodenbearbeitungszinken 162 innerhalb der Aufnahmeöffnung 159 und 160 der Werkzeugkreisel 158 um die Mittellinie 164 federnd verdrehen können, wenn der Bearbeitungsteil des jeweiligen Zinkens 162 auf ein im Boden festsitzendes Hindernis auftrifft.

## Patentansprüche

1. Bodenbearbeitungsmaschine mit mehreren in einer quer zur Fahrtrichtung verlaufenden Reihe nebeneinander angeordneten und um aufrechte Achsen rotierend angetriebenen Werkzeugkreiseln (2, 102, 140, 158), die nach unten gerichtete Bodenbearbeitungswerkzeuge (4, 104, 142, 143) aufweisen, wobei die Bodenbearbeitungswerkzeuge (4, 104, 142, 143) jeweils ein etwa rechtwinklig zum Bearbeitungsteil (10, 110, 148) des Werkzeuges abgewinkeltes Befestigungsteil (9, 109, 146, 147, 161) aufweisen, welches in etwa radial nach außen weisende Aufnahmeöffnungen des Werkzeugkreisels faßt und mittels Bolzen (18, 24, 118, 155, 163) lösbar an dem jeweiligen Werkzeugkreisel (2, 102, 140, 158) befestigt ist und zumindest etwa senkrecht zur Drehachse des Werkzeugkreisels angeordnet ist, dadurch gekennzeichnet, daß die Aufnahmeöffnungen (8, 108, 144, 145, 159, 160) in den Werkzeugkreiseln (2, 102, 140, 158) einen größeren Querschnitt als das Befestigungsteil (9, 109, 146, 147, 161) des jeweiligen Werkzeuges (4, 104, 142, 143) aufweisen, so daß die Befestigungsteile (9, 109, 146, 147, 161) der Werkzeuge (4, 104, 142, 143) mit einem gewissen Spiel in diesen Aufnahmeöffnungen (8, 108, 144, 145, 159, 160) angeordnet sind, daß in dem Werkzeugkreisel (2, 102, 140, 158) im Bereich der Aufnahmeöffnung (8, 108, 144, 145, 159, 160) und in dem Befestigungsteil (9, 109, 146, 147, 161) sich zumindest jeweils eine, vorzugsweise zwei miteinander fluchtende Bohrungen (11, 17, 111, 117, 154, 156) befinden, und daß durch diese Bohrungen die als Sicherungsbolzen ausgebildeten Bolzen (18, 24, 118, 155, 163) zur Sicherung der leicht lösbar gehaltenen Werkzeuge (4, 104, 142, 143) in den Aufnahmeöffnungen (8, 108, 144, 145, 159, 160) der Werkzeugkreisel (2, 102, 140, 158) gesteckt sind.

2. Bodenbearbeitungsmaschine nach Anspruch 1, dadurch gekennzeichnet, daß die Bohrungen (17, 117, 156) in dem Werkzeugkreisel (2, 102, 140, 158) mit den Bohrungen (11, 111, 154) des in die Aufnahmeöffnung (8, 108, 144, 145, 159, 160) gesteckten Befestigungsteiles (9, 109, 146, 147, 161) des Werkzeuges (4, 104, 142, 143) fluchten.

3. Bodenbearbeitungsmaschine nach Anspruch 2, dadurch gekennzeichnet, daß die fluchtenden Bohrungen (11, 17) in dem Werkzeugkreisel (2) und in dem Befestigungsteil (9) größer sind als der Durchmesser der Bolzen (18, 24).

4. Bodenbearbeitungsmaschine nach Anspruch 2 und 3, dadurch gekennzeichnet, daß die Bolzen (18, 24) mittels Schnellverschlüsse (19, 25) gesichert sind.

5. Bodenbearbeitungsmaschine nach Anspruch 1, dadurch gekennzeichnet, daß sich auf der Unterseite der Werkzeugkreisel (2) zur Bildung der Aufnahmeöffnungen (8) nach unten gerichtete Stege (15) befinden, und daß auf der Unterseite der Stege (15) eine zumindest zwei Stege (15) verbindende Platte (13) aufgeschweißt ist.

6. Bodenbearbeitungsmaschine nach Anspruch 1, dadurch gekennzeichnet, daß die Bolzen (18, 24) auf der Oberseite des Werkzeugkreisels (2) versenkt angeordnet sind.

7. Bodenbearbeitungsmaschine nach Anspruch 1, dadurch gekennzeichnet, daß die Sicherungsteile (19, 25) bzw. die Schnellverschlüsse der Bolzen (18, 24) auf der Unterseite der Werkzeugkreisel (2) geschützt angeordnet sind.

8. Bodenbearbeitungsmaschine nach Anspruch 7, dadurch gekennzeichnet, daß auf der Unterseite der Werkzeugkreisel (2) zumindest in Drehrichtung der Werkzeugkreisel gesehen vor den Bolzen (18, 24) Schutzschirme (22) angeordnet sind.

9. Bodenbearbeitungsmaschine nach Anspruch 1, dadurch gekennzeichnet, daß der Durchmesser (D) der Werkzeugkreisel (2) etwa dem Abstand (A) zwischen den oberen äußeren Teilen der Werkzeuge (4) entspricht.

10. Bodenbearbeitungsmaschine nach Anspruch 9, dadurch gekennzeichnet, daß die Werkzeugkreisel (2) einen schmalen umlaufenden Ring (23) aufweisen.

11. Bodenbearbeitungsmaschine nach Anspruch 1, dadurch gekennzeichnet, daß die Aufnahmeöffnung (108) zumindest in ihrem äußeren radialen Bereich (120) von der Mitte (121) der Aufnahmeöffnung (108) in tangentialer Richtung gesehen eine wesentlich größere Höhe (E) als die Höhe (F) der Befestigungsteile (109) der Werkzeuge (104) aufweist.

12. Bodenbearbeitungsmaschine nach Anspruch 11, dadurch gekennzeichnet, daß die Aufnahmeöffnungen (108) in den Werkzeugkreiseln (102) für die Befestigungsteile (109) sich zumindest etwa bis zur Mitte des Werkzeugkreisels erstrecken, und daß die Befestigungsteile (109) zumindest annähernd sich bis zur Mitte des Werkzeugkreisels (102) in die Aufnahmeöffnungen (108) hinein erstrecken.

13. Bodenbearbeitungsmaschine nach Anspruch 11, dadurch gekennzeichnet, daß die Aufnahmeöffnungen (108) in ihrem der Mitte (127) des Werkzeugkreisels (102) nächstliegenden Bereich (128) einen Querschnitt (129) aufweisen, der zumindest annähernd dem Querschnitt der Befestigungsteile (109) der Werkzeuge (104) entspricht, und daß sich die Aufnahmeöffnungen (108) in einem Abstand von der Mitte (127) des Werkzeugkreisels (102) in tangentialer Richtung vor allem in den seitlichen Bereichen der Aufnahmeöffnungen sich stufenweise oder zumindest annähernd kontinuierlich vergrößern.

14. Bodenbearbeitungsmaschine nach Anspruch 13, dadurch gekennzeichnet, daß die obere Fläche (130) der in Drehrichtung (103) gesehen hinteren Hälfte (131) der Aufnahmeöffnung (108) etwa von der Mitte (121) der Aufnahmeöffnung (108) schräg nach oben verläuft, und daß die untere Fläche (132) der in Drehrichtung (103) gesehen vorderen Hälfte (133) der Aufnahmeöffnung (108) von der Mitte (121) der Aufnahmeöffnung (108) schräg nach unten verläuft.

15. Bodenbearbeitungsmaschine nach Anspruch 13, dadurch gekennzeichnet, daß jeweils von der Mitte (121) der Aufnahmeöffnung (108) aus die oberen und unteren Flächen (130, 132, 134, 135) der Aufnahmeöffnung (108) schräg nach oben oder unten verlaufen.

16. Bodenbearbeitungsmaschine nach Anspruch 13, dadurch gekennzeichnet, daß die Aufnahmeöffnung (108) von der Seite aus in etwa radialer Richtung oder in Richtung der Drehachse des Werkzeugkreisels (102) gesehen einen etwa X-förmigen Querschnitt (126) aufweist, wobei dieser Querschnitt (126) sich von außen nach innen in radialer Richtung erstreckt und in einem Abstand von der Drehachse des Werkzeugkreisels (102) in ein zumindest annähernd dem Querschnitt des inneren Teiles (125) des Befestigungsteiles (109) des Werkzeuges (104) entsprechenden Querschnitt (129) übergeht.

17. Bodenbearbeitungsmaschine nach Anspruch 13, dadurch gekennzeichnet, daß sich in der Mitte (121) der Aufnahmeöffnung (108) sich jeweils auf der unteren und der oberen Seite der Aufnahmeöffnung (108) ein sich in radialer Richtung (136) erstreckender Steg befindet, wobei der senkrechte Abstand (G) zwischen dem oberen und dem unteren Steg (136) zumindest annähernd der Höhe (F) des Befestigungsteiles (109) entspricht.

18. Bodenbearbeitungsmaschine nach Anspruch 11 und 12, dadurch gekennzeichnet, daß das Befestigungsteil (109) auf seiner dem Bodenbearbeitungsteile (110) abgewandten Seite (122) eine Aussparung aufweist, die der Kontur der Nabe (124) des Werkzeugkreisels (102) entspricht, daß die Aufnahmeöffnung sich bis zur Mitte der Werkzeugkreisel seitlich der Nabe des Werkzeugkreisels erstreckt, und daß die durch die Aussparung (123) entstandenen Zungen (125) des Befestigungsteiles (109) sich seitlich der Nabe (124) bis etwa zur Mitte des Werkzeugkreisels (102) erstrecken.

19. Bodenbearbeitungsmaschine nach Anspruch 11, dadurch gekennzeichnet, daß der größere Querschnitt (126) der Aufnahmeöffnung (108) sich zumindest über die halbe Länge (L) der Aufnahmeöffnung (108) oder des Befestigungsteiles (109) jedoch nicht mehr als über vier Fünftel der Länge (L) der Aufnahmeöffnung (108) oder des Befestigungsteiles (109) erstreckt.

20. Bodenbearbeitungsmaschine nach Anspruch 1 oder 11, dadurch gekennzeichnet, daß die Aufnahmeöffnung (144, 145, 159, 160) für den Befestigungsteil (146, 147, 161) des Werkzeuges (142, 143, 162) sich zumindest annähernd über den gesamten Durchmesser (D) des Werkzeugkreisels (140, 158) erstreckt, und daß sich die Aufnahmeöffnung (144, 145, 159, 160) von dem Anfang (153) des Befestigungsteiles (146, 147, 161) aus in Richtung der des Werkzeuges (148) zugewandten Seite sich stetig auf ihrer Ober- und Unterseite zumindest in den seitlichen Bereichen der Aufnahmeöffnung (144, 145, 159, 160) erweitert.

21. Bodenbearbeitungsmaschine nach Anspruch 11 oder 20, dadurch gekennzeichnet, daß die Aufnahmeöffnung (144, 145, 159, 160) über zumindest zwei Drittel ihrer Länge (D) einen sich erweiterenden X-förmigen Querschnitt aufweist.

22. Bodenbearbeitungsmaschine nach Anspruch 20, dadurch gekennzeichnet, daß jeder Werkzeugkreisel (140) zwei Aufnahmeöffnungen (144, 145) aufweist, die untereinander liegend angeordnet sind.

23. Bodenbearbeitungsmaschine nach Anspruch 20, dadurch gekennzeichnet, daß jeder Werkzeugkreisel (158) zwei Aufnahmeöffnungen (159, 160) aufweist, die neben liegend angeordnet sind.

24. Bodenbearbeitungsmaschine nach Anspruch 20, dadurch gekennzeichnet, daß die Befestigungsteile (146, 147) und die Werkzeugkreisel jeweils am Anfang (153) des Befestigungsteiles (146, 147) von einem Bolzen (155) durchsetzt sind.


**Claims**

1. A ground cultivating machine with several implement rotors (2, 102, 140, 158), which are arranged adjacently in a row running transversly to the direction of travel and are rotatably driven about vertical axes, these implement rotors (2, 102, 140, 158) have ground cultivating implements (4, 104, 142, 143) which are directed downwards, whereby the ground cultivating implements (4, 104, 142, 143) each have a securing part (9, 109, 146, 147, 161) which is angled at almost right angles to the cultivating part (10, 110, 148) of the implement, this securing part locates in receiving apertures on the implement rotor which face radially outwards, and is secured by means of bolts (18, 24, 118, 155, 163) to the respective implement rotor (2, 102, 140, 158), is easily removed and is arranged at least approximately perpendicular to the axis of rotation of the implement rotor, characterised in that the receiving apertures (8, 108, 144, 145, 159, 160) in the implement rotors (2, 102, 140, 158) have a larger cross-section than those in securing part (9, 109, 146, 147, 161) of the respective implement (4, 104, 142, 143) so that the securing parts (9, 109, 146, 147, 161) of the implements (4, 104, 142, 143) are arranged in these receiving apertures (8, 108, 144, 145, 159, 160) with a certain amount of play, in that in each implement rotor (2, 102, 140, 158) in the area of the receiving aperture (8, 108, 144, 145, 159, 160) and in each securing part (9, 109, 146, 147, 161) there is at least one hole, preferably two holes (11, 17, 111, 117) aligned with each other, and in that the bolts (18, 24, 118, 155, 163) designed as safety bolts are inserted through bore holes so as to secure the implements (4, 104, 142, 143), which are easily removed, in the receiving apertures (8, 108, 144, 145, 159, 160) of the implement rotor (2, 102, 140, 158).

2. A ground cultivating machine as claimed in claim 1, wherein the holes (17, 117, 156) in the implement rotor (2, 102, 140, 158) are in alignment with the holes (11, 111, 154) of the securing part (9, 109, 146, 147, 161) of the implement (4, 104, 142, 143) which is inserted into the receiving apertures (8, 108, 144, 145, 159, 160).

3. A ground cultivating machine as claimed in claim 2 wherein the aligned holes (11, 17) in the implement rotor (2) and in the securing part (9) are larger than the diameter of the bolts (18, 24).

4. A ground cultivating machine as claimed in claims 2 and 3, wherein the bolts (18, 24) are secured by means of snap locks (19, 25).

5. A ground cultivating machine as claimed in claim 1, wherein bars (15), which are directed downwards, are located on the lower side of the implement rotor (2) to form the receiving apertures (8), and wherein a plate (13), which connects at least two bars (15), is welded on to the under side of the bars (15).

6. A ground cultivating machine as claimed in claim 1, wherein the bolts (18, 24) are countersunk on the upper side of the implement rotor (2).

7. A ground cultivating machine as claimed in claim 1, wherein the safety parts (19, 25) or the snap locks of the bolts (18, 24) are arranged protected on the lower side of the implement rotor (2).

8. A ground cultivating machine as claimed in claim 7, wherein protective screens (22) are arranged in front of the bolts (18, 24) on the lower side of the implement rotor (2) at least as seen in the direction of rotation of the implement rotor.

9. A ground cultivating machine as claimed in claim 1, wherein the diameter (D) of the implement rotor (2) corresponds approximately to the distance (A) between the upper, outer parts of the implements (4).

10. A cultivating machine as claimed in claim 9, wherein the implement rotor (2) has a narrow, rotating collar (23).

11. A ground cultivating machine as claimed in claim 1, wherein the receiving aperture (108) has a much greater height (E) than the height (F) of the securing parts (109) of the implements (104) at least in its outer radial area (120) from the middle (121) of the receiving aperture when seen in a tangential direction.

12. A ground cultivating machine as claimed in claim 11, wherein the receiving apertures (108) in the implement rotors (102) for the securing parts (109) extend at least approximately to the middle of the implement rotor, and wherein the securing parts (109) extend into the receiving apertures (108) at least nearly to the middle of the implement rotor (102).

13. A ground cultivating machine as claimed in claim 11, wherein the receiving apertures (108) have a cross-section (129) in the area (128) adjacent to the middle (127) of the implement rotor (102), this cross-section (129) corresponds at least approximately to the cross-section of the securing parts (109) of the implement rotor (104), and wherein the receiving apertures (108) increase gradually or at least nearly continuously at a distance from the middle (127) of the implement rotor (102) in a tangential direction and above all at the sides of the receiving apertures.

14. A ground cultivating machine as claimed in claim 13, wherein the upper surface (130) of the rear half (131) of the receiving aperture (108), when seen in the direction of rotation (103), slopes upwards approximately from the middle (121) of the receiving aperture (108), and wherein the lower surface (132) of the front half (133) of the receiving aperture (108), when seen in the direction of rotation (103), slopes downwards from the middle (121) of the receiving aperture (108).

15. A ground cultivating machine according to claim 13, wherein the upper and lower surfaces (130, 132, 134, 135) of the receiving aperture (108) each slope upwards or downwards from the middle (121) of the receiving aperture (108).

16. A ground cultivating machine according to claim 13, wherein the receiving aperture (108) has an approximately X-shaped cross-section (126) when seen from the side in a radial direction or in the direction of axis of rotation of the implement rotor (102), whereby this cross-section (126) extends from out to in a radial direction and at a distance from the axis of rotation of the implement rotor (102) converts into a cross-section (129) that corresponds at least approximately to the cross-section of the inner part (125) of the securing part (109) of the implement (104).

17. A ground cultivating machine as claimed in claim 13, wherein a bar (136), which extends in a radial direction, is located in the middle (121) of the receiving aperture (108) on each of the upper and the lower sides of the receiving aperture (108), whereby the perpendicular distance (G) between the upper and the lower bar (136) corresponds at least approximately to the height (F) of the securing part (109).

18. A ground cultivating machine as claimed in claims 11 and 12, wherein the securing part (109) has a recess on its side (122) which is turned away from the ground cultivating part (110), this recess corresponds to the contour of the hub (124) of the implement rotor (102), wherein the receiving aperture extends up to the middle of the implement rotor on the side of the implement rotor hub, and wherein the tongues (125) of the securing part (109) resulting from the recess (123) extend on the hub (124) side approximately to the middle of the implement rotor (102).

19. A ground cultivating machine as claimed in claim 11, wherein the larger cross-section (126) of the receiving aperture (108) extends over at least half the length (L) of the receiving aperture (108) or of the securing part (109), however, not more than over four fifths of the length (L) of the receiving aperture (108) or of the securing part (109).

20. A ground cultivating machine as claimed in claims 1 or 11, wherein the receiving aperture (144, 145, 159, 160) for the securing parts (146, 147, 161) of the implement (142, 143, 162) extends at least almost over the entire diameter (D) of the implement rotor (140, 158), and wherein the receiving aperture (144, 145, 159, 160) widens constantly at least at the side on its upper and lower sides from the beginning (153) of the securing part (146, 147, 161), in the direction of the side that is turned towards the implement (148).

21. A ground cultivating machine as claimed in claims 11 or 20, wherein the receiving aperture (144, 145, 159, 160) has a widening, X-shaped cross-section over at least two thirds of its length (D).

22. A ground cultivating machine as claimed in claim 20, wherein each implement rotor (140) has two receiving apertures (144, 145), which are arranged one under the other.

23. A ground cultivating machine as claimed in claim 20, wherein each implement rotor (158) has two receiving apertures (159, 160), which are arranged adjacent to one another.

24. A ground cultivating machine as claimed in claim 20, wherein a bolt (155) is placed through both the securing parts (146, 147) and the implement rotor at the beginning (153) of the securing part (146, 147).

**Revendications**

1. Machine de travail du sol comportant plusieurs rotors porte-outils (2, 102, 140, 158) disposés côte à côte suivant une rangée transversale à la direction de déplacement et entraînés en rotation sur des axes verticaux, les rotors étant équipés d'outils de travail du sol (4, 104, 142, 143) dirigés vers le bas, les outils (4, 104, 142, 143) ayant chaque fois une partie de fixation (9, 109, 146, 147, 161) coudée sensiblement à l'équerre par rapport à la partie utile (10, 110, 148), la partie de fixation étant placée dans des logements du rotor porte-outils, logements dirigés sensiblement radialement vers l'extérieur et fixés par des goujons (18, 24, 124, 154, 163) de manière amovible sur le rotor porte-outils (2, 102, 140, 158) respectif et au moins de manière perpendiculaire à l'axe de rotation du rotor porte-outils, machine caractérisée en ce que les logements (8, 108, 144, 145, 159, 160) des rotors porte-outils (2, 102, 140, 158) ont une section plus grande que celle de la partie de fixation (9, 109, 146, 147, 161) de l'outil respectif (4, 104, 142, 143), de sorte que les parties de fixation (9, 109, 146, 147, 161) des outils (4, 104, 142, 143) soient reçues avec un certain jeu dans les logements (8, 108, 144, 145, 159, 160) et en ce que le rotor porte-outils (2, 102, 140, 158) comporte au niveau des logements (8, 108, 144, 145, 159, 160) et de la partie de fixation (9, 109, 146, 147, 161) au moins un perçage respectif (11, 17, 111, 117, 154, 156) et de préférence deux perçages alignés les uns par rapport aux autres et en ce que les perçages reçoivent des goujons (18, 24, 118, 155, 163) en forme de goujons de fixation pour bloquer les outils (4, 104, 142, 143) de manière facilement amovible dans les logements (8, 108, 144, 145, 159, 160) du rotor porte-outils (2, 102, 140, 158).

2. Machine pour le travail du sol selon la revendication 1, caractérisée en ce que les perçages (17, 117, 156) du rotor porte-outils (2, 102, 140, 158) sont alignés sur les perçages (11, 111, 154) de la partie de fixation (9, 109, 146, 147, 161) placés dans les logements (8, 108, 144, 145, 159, 160) et appartenant à l'outil (4, 104, 142, 143).

3. Machine pour le travail du sol selon la revendication 2, caractérisée en ce que les perçages alignés (11, 17) du rotor porte-outils (2) et de la partie de fixation (9) sont plus grands que le diamètre du goujon (18, 24).

4. Machine pour le travail du sol selon les revendications 2 et 3, caractérisée en ce que les goujons (18, 24) sont maintenus par des moyens de liaison rapides (19, 25).

5. Machine pour le travail du sol selon la revendication 1, caractérisée en ce que sur le côté inférieur du rotor porte-outils (2), on a des entretoises (15) dirigées vers le bas pour former les logements (8) et en ce qu'une plaque (13) qui relie au moins deux entretoises (15) est soudée contre la face inférieure des entretoises (15).

6. Machine pour le travail du sol selon la revendication 1, caractérisée en ce que les goujons (18, 24) sont disposés avec une tête noyée dans la face supérieure du rotor porte-outils (2).

7. Machine pour le travail du sol selon la revendication 1, caractérisée en ce que les pièces de fixation (19, 25) ou les moyens de liaison rapides des goujons (18, 24) sont prévus dans une position protégée sur la face inférieure du rotor porte-outils (2).

8. Machine pour le travail du sol selon la revendication 7, caractérisée en ce que des écrans de protection (22) sont prévus sur la face inférieure des rotors porte-outils (2) au moins en avant des goujons (18, 24) vus dans le sens de rotation des rotors porte-outils.

9. Machine pour le travail du sol selon la revendication 1, caractérisée en ce que le diamètre (D) des rotors porte-outils (2) correspond sensiblement à la distance (A) entre les parties extérieures supérieures des outils (4).

10. Machine pour le travail du sol selon la revendication 9, caractérisée en ce que les rotors porte-outils (2) ont un anneau périphérique (23) étroit.

11. Machine pour le travail du sol selon la revendication 1, caractérisée en ce que le logement (108) présente au moins dans sa zone radialement à l'extérieur (120) par rapport au milieu (121) du logement (108), vu dans la direction tangentielle, une hauteur (E) beaucoup plus importante que la hauteur (F) de la partie de fixation (109) de l'outil (104).

12. Machine pour le travail du sol selon la revendication 11, caractérisée en ce que les logements (108) des rotors porte-outils (102) recevant les parties de fixation (109) s'étendent au moins sensiblement jusqu'au milieu de chaque rotor porte-outils et en ce que les parties de fixation (109) pénètrent au moins approximativement jusqu'au milieu des rotors porte-outils (102) dans les logements (108).

13. Machine pour le travail du sol selon la revendication 11, caractérisée en ce que les logements (108) ont dans leur zone (128) la plus proche du milieu (127) du rotor porte-outils (102), une section (129) qui correspond au moins approximativement à la section des parties de fixation (109) des outils (104), et en ce que les logements (108) vont en s'agrandissant de manière discontinue ou au moins approximativement en continu à une distance du milieu (127) du rotor porte-outils (102), dans la direction tangentielle et avant tout dans les zones latérales des logements.

14. Machine pour le travail du sol selon la revendication 13, caractérisée en ce que la surface supérieure (130) de la moitié arrière (131) vue dans le sens de rotation (103) du logement (108) est inclinée vers le bas sensiblement à partir du milieu (121) du logement (108) et en ce que la surface inférieure (132) de la moitié avant (133) vue dans le sens de rotation (103) du logement (108) est inclinée vers le bas à partir du milieu (121) du logement (108).

15. Machine pour le travail du sol selon la revendication 13, caractérisée en ce que partant chaque fois du milieu (121) du logement (108), les surfaces supérieures et inférieures (130, 132, 134, 135) du logement (108) sont inclinées vers le haut ou vers le bas.

16. Machine pour le travail du sol selon la revendication 13, caractérisée en ce que le logement (108) présente en vue de côté dans la direction radiale ou dans la direction de l'axe de rotation du rotor porte-outils (102), une section (126) sensiblement en forme de X et cette section (126) s'étend dans la direction radiale de l'extérieur vers l'intérieur et à une certaine distance de l'axe de rotation du rotor porte-outils (102), cette section passe dans une section (129) qui correspond au moins approximativement à la section de la partie intérieure (125) de la partie de fixation (109) de l'outil (104).

17. Machine pour le travail du sol selon la revendication 13, caractérisée en ce qu'au milieu (121) du logement (108), on a une entretoise radiale (136) chaque fois sur le côté inférieur et le côté supérieur du logement (108), la distance verticale (G) entre l'entretoise supérieure et l'entretoise inférieure (136) correspondant au moins approximativement à la hauteur (F) de la partie de fixation (109).

18. Machine pour le travail du sol selon les revendications 11 et 12, caractérisée en ce que la partie de fixation (109) comporte une cavité dans son côté (122) opposé à la partie utile (110), cavité qui correspond au contour du moyeu (124) du rotor porte-outils (102) et le logement s'étend jusqu'au milieu du rotor porte-outils, latéralement par rapport au moyeu du rotor et en ce que les languettes (125) formées par la cavité (123) de la partie de fixation (109) s'étendent latéralement par rapport au moyen (124) sensiblement jusqu'au milieu du rotor porte-outils (102).

19. Machine pour le travail du sol selon la revendication 11, caractérisée en ce que la plus grande section (126) du logement (108) s'étend sur au moins la moitié de la longueur (L) du logement (108) ou de la partie de fixation (109) sans dépasser quatre-cinquième de la longueur (L) du logement (108) ou de la partie de fixation (109).

20. Machine pour le travail du sol selon la revendication 1 ou 11, caractérisée en ce que le logement (144, 145, 159, 160) de la partie de fixation (146, 147, 161) de l'outil (142, 143, 162) s'étend au moins approximativement sur tout le diamètre (D) du rotor porte-outils (140, 148) et en ce que le logement (144, 145, 159, 160) va en s'élargissant à partir de l'extrémité (153) de la partie de fixation (146, 147, 161) en direction du côté tourné vers l'outil (148), de manière continue par sa face supérieure et sa face inférieure au moins dans les zones latérales du logement (144, 145, 159, 160).

21. Machine pour le travail du sol selon la revendication 11 ou 20, caractérisée en ce que le logement (144, 145, 159, 160) présente sur au moins deux-tiers de sa longueur (D) une section en forme de X qui s'élargit.

22. Machine pour le travail du sol selon la revendication 20, caractérisée en ce que chaque rotor porte-outils (140) comporte deux logements (144, 145) qui sont prévus l'un sous l'autre.

23. Machine pour le travail du sol selon la revendication 20, caractérisée en ce que chaque rotor porte-outils (158) comporte deux logements (159, 160) qui sont prévus côte à côte.

24. Machine pour le travail du sol selon la revendication 20, caractérisée en ce que les parties de fixation (146, 147) et les rotors porte-outils sont traversés chaque fois à l'extrémité (153) de la partie de fixation (146, 147) par un goujon (155).

FIG. 1

FIG. 4

FIG.2

FIG.3

# FIG.5

FIG.6

FIG.7

FIG.8

FIG.9

FIG.10

116

117

136

113

117

136

113

FIG.11

121

134

130

E

F

127
132 108 133 136 131 135 113
129

103

FIG.12

136

108

F

136

113

104

121

137

110

103

FIG.13

FIG.14

FIG.15

141
150
149
140
155
156
154
153
151
144
146
156
155
153
154
145
142
148
147
152
143
148
D

FIG.16

140
157
142
141
150
143

FIG.17

140
144
146
147
151
145
152
143

FIG.18

D

158
163
164
162
161
162
159
161
160
163
164